# EUROPÄISCHE PATENTANMELDUNG

(11) **EP 4 382 328 A1**
(43) Veröffentlichungstag der Anmeldung: **12.06.2024**
(21) Anmeldenummer: 23213626.7
(22) Anmeldetag: 01.12.2023
(51) Int. Cl.: B60H 1/00, F24F 13/14, B60H 1/32

(54) **SYSTEM UND VERFAHREN ZUR LUFTBEAUFSCHLAGUNG EINES WÄRMETAUSCHERS SOWIE LUFTBEHANDLUNGSANLAGE DAMIT**

(30) Priorität: 05.12.2022 DE 102022132255
(71) Anmelder: Konvekta Aktiengesellschaft, 34613 Schwalmstadt-Ziegenhain (DE)
(72) Erfinder: Eckhardt, Daniel, 36280 Oberaula (DE)
(74) Vertreter: Lindinger, Bernhard

(57) **Zusammenfassung**

Die Erfindung betrifft ein System (1) zur Luftbeaufschlagung eines Wärmetauschers (3) umfassend einen Wärmetauscher (3), der zum Wärmetausch mit Luft durchströmbar ist, mindestens zwei Sensoren (17) zur Messung von Luftvolumenströmen und eine Luftströmungsregulierungseinheit (5), die in vorgesehener Luftströmungsrichtung vor dem Wärmetauscher (3) angeordnet ist, wobei die Luftströmungsregulierungseinheit (5) mindestens zwei regelbare Luftströmungsregulierungselemente (7) umfasst, die Luftströmungsregulierungselemente (7) derart regelbar ausgebildet sind, dass für mindestens zwei Teilbereiche (13) der Lufteintrittsseite (15) des Wärmetauschers (3) der auf den jeweiligen dieser Teilbereiche (13) beaufschlagte Luftvolumenstrom einzeln einstellbar ist, und dass die Sensoren (17) derart angeordnet sind, dass damit die Größe eines jeweiligen Luftvolumenstroms durch den jeweiligen der mindestens zwei Teilbereiche (13) der Lufteintrittsseite (15) oder eines jeweiligen Luftvolumenstroms durch den jeweiligen von mindestens zwei Teilbereichen (13) der Luftaustrittsseite (21) des Wärmetauschers (3) messbar ist. Ferner betrifft die Erfindung eine Luftbehandlungsanlage mit einem derartigen System (1) sowie ein Verfahren zur Steuerung eines solchen Systems (1). Mit dem System (1) ist die Flächenverteilung der Luftbeaufschlagung des Wärmetauschers regelbar.

## Beschreibung

### Gebiet der Technik:

Die Erfindung betrifft ein System zur Luftbeaufschlagung eines Wärmetauschers, das einen Wärmetauscher, der zum Wärmetausch mit Luft durchströmbar ist, mindestens zwei Sensoren zur Messung von Luftvolumenströmen und eine Luftströmungsregulierungseinheit, die in vorgesehener Luftströmungsrichtung vor dem Wärmetauscher angeordnet ist, umfasst. Derartige Systeme werden insbesondere in Luftbehandlungsanlagen wie Heizungs- oder Klimaanlagen eingesetzt. Eine übliche Luftströmungsregulierungseinheit ist dabei beispielsweise eine Einheit mit ein oder mehreren schwenkbaren Luftklappen als Luftströmungsregulierungselement/e. Bei den Systemen zur Luftbeaufschlagung eines Wärmetauschers wird vor allem der Luftvolumenstrom durch den Wärmetauscher reguliert. Ferner betrifft die Erfindung eine Luftbehandlungsanlage mit so einem System sowie ein Verfahren zum Betreiben eines derartigen Systems in einer Luftbehandlungsanlage.

### Stand der Technik:

Bekannt sind Systeme zur Luftbeaufschlagung eines Wärmetauschers in Luftbehandlungsanlagen, bei denen mit einer eine schwenkbare Luftklappe umfassende Luftströmungsregulierungseinheit die Luftbeaufschlagung eines Wärmetauschers geregelt wird. Zum Beispiel offenbart die JP 2019 081460 A eine Heizungs- und Klimaanalage mit einem System zur Luftbeaufschlagung eines Wärmetauschers, bei dem zwei getrennte Luftströme von der mit schwenkbaren Luftklappen ausgestatteten Luftströmungsregulierungseinheit so gelenkt werden, dass der Wärmetauscher vom jeweiligen Luftstrom durchströmt oder nicht durchströmt wird. Ein entsprechendes zwei getrennte Luftströme regulierendes System zur Luftbeaufschlagung eines Wärmetauschers offenbart ferner JP 2010 076506 A. Dabei wird der Wärmetauscher von zwei voneinander getrennten Luftströmen beaufschlagt. Das Regulieren der jeweiligen Größe der Luftvolumenströme auf den Wärmetauscher ist dabei nicht besonders genau. Die Größe des vom jeweiligen Luftstrom beaufschlagten Teilbereichs der Lufteintrittsseite variiert nachteilig je nach Schwenkstellung der Luftklappen der Luftströmungsregulierungseinheit.

In US 2021/0162858 A1 ist ein System zur Luftbeaufschlagung eines Wärmetauschers offenbart, das ein Gerät zur Regulierung des Luftstroms zeigt. Dabei werden vor der Lufteintrittsseite des Wärmetauschers zwei gleichförmig veränderbare Teilflächen mit zwei Jalousien vom Luftstrom abgedeckt. Die Regulierung der Größe des Luftvolumenstroms ist dabei nicht besonders genau. Außerdem wird nachteilig je nachdem ob abgedeckt oder nicht abgedeckt der jeweilige Teilbereich der Lufteintrittsseite des Wärmetauschers entweder ganz oder gar nicht mit Luft beaufschlagt.

In DE 10 2010 029 367 A1 ist eine Klimaanlagensteuerung offenbart, mit der von einem Ventilator geblasene Luft durch eine Temperiervorrichtung strömt und danach in einem Luftverteilungssystem auf mehrere Luftkanäle gesteuert verteilt wird, wobei für jeden Luftkanal eine Drosselklappe einstellbar ist. Dabei ist eine Leistungsregelung des Ventilators auf einen erforderlichen Vordruck anhand eines mittels Sensors detektierten Drucks vorgesehen, wobei jedoch die Luftbeaufschlagung der Temperiervorrichtung nur insgesamt eingestellt wird.

In DE 11 2014 005 301 T5 ist eine Klimaanlage offenbart, bei der ein durch Wärmetauscher strömender Luftstrom mit einem trennenden Element aufgeteilt wird und auf der Blas-Seite des Gebläseventilators mit einem weiteren im Gehäuse angeordneten trennenden Element auf die Ausblasöffnungen verteilt wird, wobei die trennenden Elemente so angeordnet sind, dass eine relative Position der trennenden Elemente zueinander in einer Drehrichtung des Gebläseventilators abweicht, womit im Ergebnis die Vermischung der Luftströme eingeschränkt werden kann.

In DE 196 51 222 A1 ist eine mehrkanalige Heiz- oder Klimaanlage offenbart, bei der eine steuerbare Luftverteileinheit die von einem Luftzufuhrgebläse zugeführte Luft auf einzelne Luftkanäle mit ihren Heizkörpern variabel aufteilt. Dafür sind Mittel zur individuellen Vorgabe eines jeweiligen Luftmengensollwerts für jeden Luftkanal vorgesehen, wobei aber eine unmittelbare Kontrolle über die tatsächlich bei Betrieb strömenden Luftmengen nicht stattfindet.

Der im Anspruch 1 angegebenen Erfindung liegt also das Problem zugrunde, dass bei bisherigen Systemen die Regulierung des oder der Luftvolumenströme auf den Wärmetauscher nicht besonders genau ist und das Steuern der Größe von Luftvolumenströmen durch Teilbereiche der Lufteintrittsseite oder Luftaustrittsseite des Wärmetauschers unzureichend ist.

Es ist somit Aufgabe ein verbessertes System zur Luftbeaufschlagung eines Wärmetauschers bereitzustellen.

Ein entsprechendes Problem liegt einer Luftbehandlungsanlage mit einem derartigen System zugrunde. Es ist somit eine weitere Aufgabe, eine im Bereich der Luftbehandlung verbesserte Luftbehandlungsanlage bereitzustellen.

Eine weitere Aufgabe besteht darin, ein Verfahren zum Betreiben eines verbesserten Systems zur Luftbeaufschlagung eines Wärmetauschers in einer Luftbehandlungsanlage bereitzustellen.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass das System zur Luftbeaufschlagung eines Wärmetauschers einen Wärmetauscher, der zum Wärmetausch mit Luft durchströmbar ist, mindestens zwei Sensoren zur Messung von Luftvolumenströmen und eine Luftströmungsregulierungseinheit, die in vorgesehener Luftströmungsrichtung vor dem Wärmetauscher angeordnet ist, umfasst, wobei die Luftströmungsregulierungseinheit mindestens zwei regelbare Luftströmungsregulierungselemente umfasst, und die Luftströmungsregulierungselemente derart regelbar ausgebildet sind, dass für mindestens zwei Teilbereiche der Lufteintrittsseite des Wärmetauschers der auf den jeweiligen dieser Teilbereiche beaufschlagte Luftvolumenstrom einzeln einstellbar ist, sowie die Sensoren derart angeordnet sind, dass damit die Größe eines jeweiligen Luftvolumenstroms durch den jeweiligen der mindestens zwei Teilbereiche der Lufteintrittsseite oder eines jeweiligen Luftvolumenstroms durch den jeweiligen von mindestens zwei Teilbereichen der Luftaustrittsseite des Wärmetauschers messbar ist, wird das Problem gelöst.

Eine Luftströmungsregulierungseinheit ist derart ausgebildet, dass damit Luftströmung zur Beaufschlagung des Wärmetauschers regulierbar ist. Ein Luftströmungsregulierungselement ist dabei ein Element, mit dem unmittelbar die Luftströmung beeinflussbar ist.

Die Erfindung hat insbesondere den Vorteil, dass der jeweilige Luftvolumenstrom durch den jeweiligen Teilbereich der Lufteintrittsseite und/oder Luftaustrittsseite des Wärmetauschers einzeln einstellbar ist, so dass die Luftbeaufschlagung auf den Wärmetauscher in der Flächenverteilung auf die Lufteintrittsseite variierbar ist. Damit ist eine gewollte Flächenverteilung des durch den Wärmetauscher strömenden Luftvolumenstroms einstellbar. Die Sensoren zur Messung der Größe der Luftvolumenströme durch die Teilbereiche der Lufteintrittsseite oder Luftaustrittsseite des Wärmetauschers ermöglichen eine Rückmeldung der Flächenverteilung, was die Genauigkeit der Regulierung der Luftvolumenströme durch die Teilbereiche verbessert. Dieses vereinfacht ein Nachjustieren des Regulierens der Luftbeaufschlagung des Wärmetauschers und erhöht die Effizienz des Wärmetauschs im Wärmetauscher.

In den Unteransprüchen sind vorteilhafte Ausgestaltungen, Weiterbildungen und Verbesserungen des jeweiligen Gegenstandes der Erfindung angegeben.

Vorzugsweise umfasst das System zur Luftbeaufschlagung eines Wärmetauschers eine Regelung, die derart ausgebildet ist, dass sie automatisch die Luftströmungsregulierungselemente anhand der durch die Sensoren gemessenen Größen der Luftvolumenströme so regelt, dass die jeweilige Größe des jeweiligen Luftvolumenstroms durch die mindestens zwei Teilbereiche in einem jeweils vorgegebenen Sollwertbereich liegt. Dadurch ist eine automatische Rückkopplung von gemessenen Größen der Luftvolumenströme zur Einstellung der Größe der Luftvolumenströme an der Luftströmungsregulierungseinheit gegeben. Die Flächenverteilung der Größe der durch den Wärmetauscher strömenden Luftvolumenströme lässt sich so automatisch auf eine vorgegebene Flächenverteilung einstellen. Die Flexibilität ist damit hinsichtlich der Luftbeaufschlagung des Wärmetauschers erhöht.

Gemäß einer vorteilhaften Ausführung ist die Regelung derart ausgebildet, dass sie automatisch die Luftströmungsregulierungselemente anhand der durch die Sensoren gemessenen Größen der Luftvolumenströme so regelt, dass die Differenz/en der jeweiligen Größen der jeweiligen Luftvolumenströme durch die mindestens zwei Teilbereiche in einem vorgegebenen Sollwertbereich lieg(t)/en. Damit ist besonders gut eine möglichst einheitliche Flächenverteilung der Größe der durch den Wärmetauscher strömenden Luftvolumenströme erreichbar. Es bleibt bei so festgelegter relativer Flächenverteilung dennoch die Gesamtgröße der Luftvolumenströme variierbar. Dieses erhöht die Flexibilität.

Vorteilhaft sind die Sensoren zur Messung der Luftvolumenströme durch die mindestens zwei Teilbereiche auf Seiten der Luftaustrittsseite des Wärmetauschers angeordnet. Dadurch ist die Flächenverteilung der Luftvolumenströme bei Austritt aus dem Wärmetauscher ermittelbar, was Aufschluss über die Luftströmung durch den Wärmetauscher gibt sowie für die Luftverteilung im weiteren Strömungsweg von Nutzen ist.

Gemäß einer vorteilhaften Ausführung sind die Sensoren zur Messung der Luftvolumenströme durch die mindestens zwei Teilbereiche auf Seiten der Lufteintrittsseite des Wärmetauschers angeordnet. Damit ist die Flächenverteilung der Luftbeaufschlagung des Wärmetauschers direkt messbar.

Nach einer vorteilhaften Weiterbildung umfasst das System zur Luftbeaufschlagung eines Wärmetauschers zur Messung des jeweiligen Luftvolumenstroms durch den jeweiligen Teilbereich der Lufteintrittsseite oder den jeweiligen Teilbereich der Luftaustrittsseite des Wärmetauschers jeweils mindestens zwei der Sensoren. Dadurch ist die Messgenauigkeit erhöht, was eine genauere Einstellung der Luftbeaufschlagung des Wärmetauschers mittels des Regelns der Luftströmungsregulierungselemente ermöglicht. Besonders von Vorteil ist dabei eine derartige Ausbildung der Regelung, dass sie aus den für den jeweiligen Luftvolumenstrom durch den jeweiligen Teilbereich von den dem jeweiligen Luftvolumenstrom zugeordneten Sensoren gemessenen Werten den Mittelwert als gemessene Größe des jeweiligen Luftvolumenstroms bildet, was eine besonders genaue Bestimmung der Größe des jeweiligen Luftvolumenstroms durch den jeweiligen Teilbereich darstellt.

Vorzugsweise sind die regelbaren Luftströmungsregulierungselemente der Luftströmungsregulierungseinheit als schwenkbare Luftleitbleche ausgebildet. Damit ist eine Luftströmung auf einfache Weise regulierbar. Besonders vorteilhaft ist eine Ausführung, bei der die als schwenkbare Luftleitbleche ausgebildeten regelbaren Luftströmungsregulierungselemente über von der Regelung ansteuerbare elektrische Stellmotoren einzeln oder in Teilgruppen in ihrer Schwenkstellung individuell einstellbar sind, wodurch das einzelne Regeln der Luftvolumenströme auf Teilbereiche der Lufteintrittsseite des Wärmetauschers besonders gut durchführbar ist.

Gemäß einer vorteilhaften Ausführung des Systems zur Luftbeaufschlagung eines Wärmetauschers sind die ein oder mehreren regelbaren Luftströmungsregulierungselemente einer Hälfte der Luftströmungsregulierungseinheit unabhängig von den ein oder mehreren regelbaren Luftströmungsregulierungselementen der anderen Hälfte der Luftströmungsregulierungseinheit regelbar ausgebildet. Dadurch sind die Luftvolumenströme auf zwei Teilbereiche der Lufteintrittsseite des Wärmetauschers, wie beispielsweise die obere und untere Hälfte oder rechte und linke Hälfte unkompliziert unabhängig voneinander einzeln einstellbar. Gemäß einer vorteilhaften Weiterbildung weist jeder der beiden Hälften der Luftströmungsregulierungseinheit jeweils zwei Hälften mit jeweils einem oder mehreren regelbaren Luftströmungsregulierungselementen auf, die unabhängig von denen der jeweils anderen Hälfte regelbar ausgebildet sind. Damit sind die Luftvolumenströme auf vier Teilbereiche der Lufteintrittsseite des Wärmetauschers, wie zum Beispiel die oben links, oben recht, unten links und unten recht unkompliziert unabhängig voneinander einzeln einstellbar.

Mit einer Luftbehandlungsanlage umfassend ein erfindungsgemäßes System zur Luftbeaufschlagung eines Wärmetauschers wird die Aufgabe hinsichtlich der Bereitstellung einer verbesserten Luftbehandlungsanlage gelöst. Bezüglich vorteilhafter Ausgestaltungen und Weiterbildungen und deren Vorzüge gelten entsprechend die obigen Angaben zum erfindungsgemäßen System. Insbesondere von Vorteil ist eine erfindungsgemäße Luftbehandlungsanlage, die zur Luftbehandlung von Luft für oder in einem Fahrzeuginnenraum vorgesehen ausgebildet ist. So beispielsweise eine als Fahrzeugklimaanlage und/oder Fahrzeugwärmepumpe ausgebildete Luftbehandlungsanlage. Insbesondere wegen der beengten Platzverhältnisse ist eine effiziente Nutzung eines Wärmetauschers von Vorteil.

Das der im Anspruch 13 angegebenen erfindungsgemäßen Verfahren zugrundeliegende Problem wird durch die im Anspruch 13 aufgeführten Merkmale gelöst. Dadurch, dass das Verfahren zum Betreiben eines erfindungsgemäßen Systems in einer Luftbehandlungsanlage die Schritte des Messens der Größen der Luftvolumenströme durch mindestens zwei Teilbereiche der Lufteintrittsseite des Wärmetauschers oder durch mindestens zwei Teilbereichen der Luftaustrittsseite des Wärmetauschers mit den Sensoren, des Vergleichens der gemessenen Größen der Luftvolumenströme mit vorgegebene(m)/n Sollwert/en oder Sollwertbereich/en,
des Feststellens bei der jeweils gemessenen Größe des jeweiligen Luftvolumenstroms, ob der dafür vorgegebenen Sollwert gegeben ist oder der dafür vorgegebene Sollwertbereich eingehalten ist, und
des Regelns des/der regelbaren Luftströmungsregulierungselement(s)/e der Luftströmungsregulierungseinheit hinsichtlich des/der Luftvolumenstroms/Luftvolumenströme, für den/die die Feststellung des vorangegangenen Schritts negativ ausfiel, in der Weise, dass, wenn die gemessene Größe des Luftvolumenstroms zu gering ist, die Luftbeaufschlagung für diesen Teilbereich erhöht wird oder, wenn die gemessene Größe des Luftvolumenstroms zu groß ist, die Luftbeaufschlagung für diesen Teilbereich verringert wird, umfasst, wird das Problem gelöst.

Das erfindungsgemäße Verfahren hat insbesondere den Vorteil, dass die Flächenverteilung der Luftbeaufschlagung eines Wärmetauschers anhand vorgegebener Sollwerte oder Sollwertbereiche eingestellt wird, wobei die Rückkopplung mit gemessenen Größen eine hohe Genauigkeit der Einstellung der gewünschten Flächenverteilung der Luftbeaufschlagung des Wärmetauschers bewirkt. Damit kann die Effizienz des Wärmetauschs im Wärmetauscher erhöht werden.

Vorzugsweise läuft das erfindungsgemäße Verfahren sich wiederholend automatisch mit der Regelung gesteuert bei Betrieb der Luftbehandlungsanlage durch. Mit diesem wiederholt durchlaufenden Verfahren ist eine automatische Anpassung der Luftbeaufschlagung des Wärmetauschers auf Veränderung des in das System einströmenden Luftvolumenstroms gegeben.

Nach einer vorteilhaften Ausführung des Verfahrens werden die Luftströmungsregulierungselemente anhand der durch die Sensoren gemessenen Größen so geregelt, dass die Differenz/en der jeweiligen Größen der jeweiligen Luftvolumenströme durch die mindestens zwei Teilbereiche der Lufteintrittsseite oder der Luftaustrittsseite des Wärmetauschers in einem vorgegebenen Sollwertbereich lieg(t)/en oder diesen erreich(t)/en. Somit wird besonders gut eine gewünschte Flächenverteilung der Größen der durch den Wärmetauscher strömenden Luftvolumenströme erreicht. Es bleibt bei so festgelegter relativer Flächenverteilung dennoch die Gesamtgröße der Luftvolumenströme variierbar. Dieses erhöht die Flexibilität.

Vorzugsweise werden bei dem erfindungsgemäßen Verfahren die Luftströmungsregulierungselemente anhand der durch die Sensoren gemessenen Größen so geregelt, dass die Luftvolumenströme durch die Teilbereiche der Lufteintrittsseite und/oder Luftaustrittseite des Wärmetauschers alle die gleiche Größe oder den gleichen Größenbereich erreichen oder nicht verlassen. Dadurch wird mit dem Verfahren eine möglichst gleichmäßige Flächenverteilung der Luftbeaufschlagung des Wärmetauschers erreicht, was die Effizienz des Wärmetauschs im Wärmetauscher verbessert.

Gemäß einer vorteilhaften Weiterbildung umfasst das erfindungsgemäße Verfahren zum Betreiben einer Luftbehandlungsanlage mit einem erfindungsgemäßen System, das zur Messung des jeweiligen Luftvolumenstroms durch den jeweiligen Teilbereich der Lufteintrittsseite oder den jeweiligen Teilbereich der Luftaustrittsseite des Wärmetauschers jeweils mindestens zwei der Sensoren umfasst, den Schritt des Ermittelns der gemessenen Größe des jeweiligen Luftvolumenstroms durch das Bilden des Mittelwerts der für den jeweiligen Luftvolumenstrom durch den jeweiligen Teilbereich von den dem jeweiligen Luftvolumenstrom zugeordneten Sensoren gemessenen Werten. Damit ist die Messgenauigkeit erhöht, wodurch die Flächenverteilung der Luftbeaufschlagung des Wärmetauschers mittels des Regelns der Luftströmungsregulierungselemente genauer eingestellt werden kann.

Nach einer vorteilhaften Ausführung erfolgt im erfindungsgemäßen Verfahren zum Betreiben einer Luftbehandlungsanlage mit einem erfindungsgemäßen System, bei dem die regelbaren Luftströmungsregulierungselemente der Luftströmungsregulierungseinheit als schwenkbare Luftleitbleche ausgebildet sind, der Schritt des Regelns der Luftströmungsregulierungselemente dadurch, dass einzeln oder in Teilgruppen die regelbaren Luftströmungsregulierungselemente in ihrer Schwenkstellung über von der Regelung angesteuerte elektrische Stellmotoren eingestellt werden.

### Kurze Beschreibung der Zeichnungen:

Anhand der Zeichnungen werden Ausführungsbeispiele der Erfindung erläutert.

Es zeigen
Fig. 1 ein Ausführungsbeispiel eines Systems zur Luftbeaufschlagung eines Wärmetauschers;
Fig. 2 ein weiteres Ausführungsbeispiel eines Systems zur Luftbeaufschlagung eines Wärmetauschers;
Fig. 3 in Blockdarstellung ein Ausführungsbeispiel einer Luftbehandlungsanlage mit einem erfindungsgemäßen System;
Fig. 4 als Flussdiagramm ein Ausführungsbeispiel eines Verfahrens zum Betreiben eines erfindungsgemäßen Systems in einer Luftbehandlungsanlage; und
Fig. 5 als Flussdiagramm ein weiteres Ausführungsbeispiel eines Verfahrens zum Betreiben eines erfindungsgemäßen Systems in einer Luftbehandlungsanlage.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

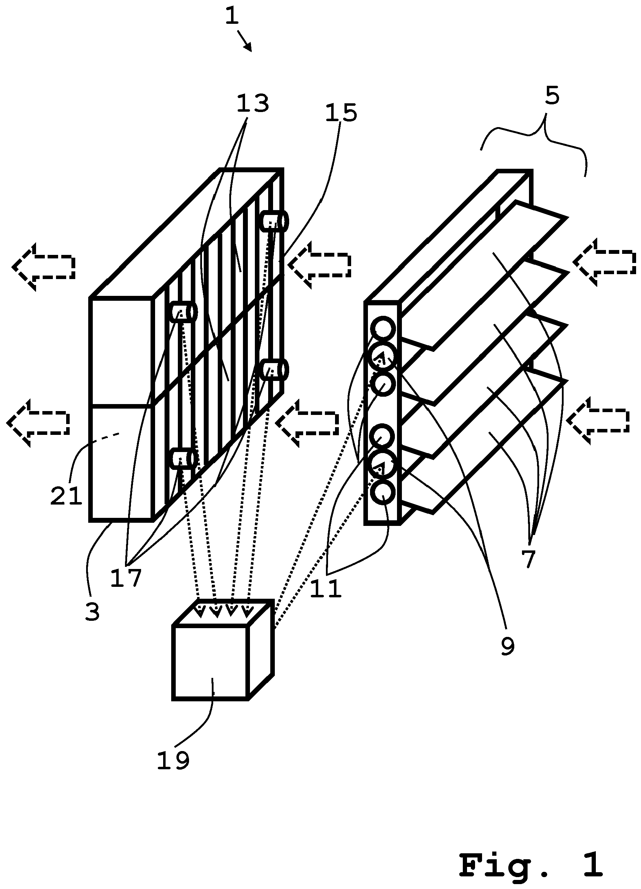

In Figur 1 ist ein Ausführungsbeispiel eines Systems 1 zur Luftbeaufschlagung eines Wärmetauschers 3 gezeigt. Der Wärmetauscher 3 ist zum Wärmetausch mit einem Wärmemedium mit Luft durchströmbar. Das Wärmemedium ist in diesem Fall ein Kältemittel, wie beispielsweise CO2, mit dem der Wärmetauscher 3 durchströmbar ist. In Luftströmungsrichtung vor dem Wärmetauscher 3 befindet sich eine Luftströmungsregulierungseinheit 5. Mit ihr lässt sich eine Luftströmung zur Beaufschlagung des Wärmetauschers 3 regulieren. Die Luftströmungsregulierungseinheit 5 umfasst vier Luftströmungsregulierungselemente 7 die als schwenkbare Luftleitbleche ausgebildet sind. Die Luftströmungsregulierungselemente 7 sind mit ihren horizontal verlaufenden Längsachsen parallel zueinander angeordnet. Sie sind jeweils um die Achse entlang ihrer hinteren Längskante schwenkbar. Über seitlich angeordnete elektrisch betreibbare Stellmotoren 9 und Zahnräder 11 sind die beiden oberen Luftströmungsregulierungselemente 7 als eine Teilgruppe und die beiden unteren Luftströmungsregulierungselemente 7 als die andere Teilgruppe in ihrer Schwenkstellung regelbar. Die beiden Teilgruppen sind dabei unabhängig voneinander in der Schwenkstellung ihrer jeweiligen beiden Luftströmungsregulierungselemente 7 einstellbar. Die Anzahl der als Luftleitbleche ausgebildeten Luftströmungsregulierungselemente 7 ist nicht auf vier begrenzt, sondern kann höher oder niedriger bis minimal zwei sein. Denkbar ist auch eine Ausführung, bei der nicht nur zwei Teilgruppen von Luftströmungsregulierungselemente 7 in ihrer Schwenkstellung unabhängig voneinander einstellbar sind, sondern jedes der Luftströmungsregulierungselemente 7 unabhängig von den anderen einzeln regelbar ausgebildet ist.

Die Luftströmungsregulierungselemente 7 sind derart regelbar, dass für den oberen und den unteren Teilbereich 13 der Lufteintrittsseite 15 des Wärmetauschers 3 der auf den jeweiligen dieser beiden Teilbereiche 13 beaufschlagte Luftvolumenstrom einzeln einstellbar ist. Die beiden Teilbereiche 13 sind die obere und untere Hälfte der Lufteintrittsseite 15. Über die Schenkstellung der Luftströmungsregulierungselemente 7 der Luftströmungsregulierungseinheit 5 werden die Luftvolumenströme geregelt.

Auf der Lufteintrittsseite 15 des Wärmetauschers 3 befinden sich vier Sensoren 17 zur Messung von Luftvolumenströmen. Es handelt sich um thermische Luftvolumenstromsensoren. Denkbar sind auch andere geeignete Arten von Sensoren 17 zur Messung von Luftvolumenströmen. Die vier Sensoren 17 verteilen sich auf den rechten und linken Bereich der oberen Hälfte sowie auf den rechten und linken Bereich der unteren Hälfte der Lufteintrittsseite 15 des Wärmetauschers 3. Die Regelung 19 ist dazu ausgebildet, die Messwerte der Sensoren 17 zu empfangen und aus diesen die gemessenen Größen der Luftvolumenströme durch den oberen und den unteren Teilbereich 13 der Lufteintrittsseite 15 des Wärmetauschers 3 zu bestimmen. So bildet der Mittelwert der Messwerte der beiden oberen Sensoren 17 die gemessene Größe des Luftvolumenstroms durch den oberen der beiden Teilbereiche 13 und der Mittelwert der Messwerte der beiden unteren Sensoren 17 die gemessene Größe des Luftvolumenstroms durch den unteren der beiden Teilbereiche 13 der Lufteintrittsseite 15. Aus den gemessenen Größen der Luftvolumenströme generiert die Regelung 19 die Steuersignale an die Stellmotoren 9 zum automatischen Regeln der Schwenkstellung der Luftströmungsregulierungselemente 7 der Luftströmungsregulierungseinheit 5 um eine gewünschte Flächenverteilung der Luftbeaufschlagung des Wärmetauschers 3 zu erreichen oder beizubehalten.

Ist beispielsweise die Größe des Luftvolumenstroms durch den oberen Teilbereich 13 der Lufteintrittsseite 15 des Wärmetauschers 3 zu groß, wird die Schwenkstellung der oberen beiden Luftströmungsregulierungselemente 7 so verändert, dass die Größe dieses Luftvolumenstroms verringert wird.

Denkbar ist beispielweise eine Variante des Systems, bei der die beiden Teilbereiche 13 mit einzeln einstellbar beaufschlagbarem Luftvolumenstrom die rechte und linke Hälfte der Lufteintrittsseite 15 des Wärmetauschers 3 sind. Dabei sind die regelbaren als schwenkbare Luftleitbleche ausgebildeten Luftströmungsregulierungselemente 7 nicht horizontal sondern vertikal mit ihren Längsachsen zueinander parallel in der Luftströmungsregulierungseinheit 5 angeordnet.

Außerdem ist eine weitere Variante denkbar, bei der sich die Sensoren 17 zur Messung der Luftvolumenströme an der Luftaustrittseite 21 des Wärmetauschers 3 befinden. Dabei erfolgt die Messung der jeweiligen Luftvolumenströme durch mindestens zwei Teilbereiche der Luftaustrittsseite 21 des Wärmetauschers 3, wie beispielsweise dessen obere und untere Hälfte.

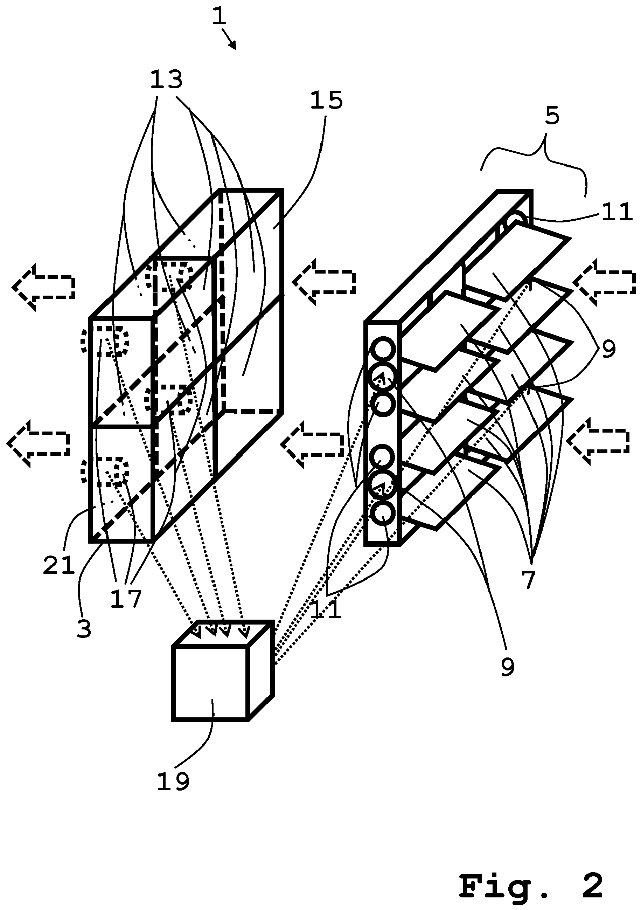

In Figur 2 ist ein weiteres Ausführungsbeispiel eines Systems 1 zur Luftbeaufschlagung eines Wärmetauschers 3 dargestellt. Der Wärmetauscher 3 ist zum Wärmetausch mit Luft durchströmbar. Er dient zum Wärmetausch der Luft mit einem durch ihn strömenden Kühlmittel, wie beispielsweise ein Wasser-Glykol-Gemisch. An seiner Luftaustrittsseite 21 befinden sich vier als thermische Luftvolumenstromsensoren ausgebildete Sensoren 17 zur Messung von Luftvolumenströmen. Der Sensor 17 am oberen rechten Teilbereich 13 der Luftaustrittsseite 21 misst den Luftvolumenstrom durch diesen Teilbereich 13. Die Sensoren 17 am oberen linken Teilbereich 13, am unteren rechten Teilbereich 13 und am unteren linken Teilbereich 13 messen entsprechend den jeweiligen Luftvolumenstrom durch die jeweiligen Teilbereiche 13 der Luftaustrittsseite 21 des Wärmetauschers 3. In Luftströmungsrichtung ist dem Wärmetauscher 3 eine Luftströmungsregulierungseinheit 5 vorgelagert. Mit ihr kann die Flächenverteilung des durch sie strömenden Luftstroms in der Ebene senkrecht zur Luftströmungsrichtung reguliert werden. Dafür verfügt die Luftströmungsregulierungseinheit 5 über acht als Luftleitbleche ausgebildete Luftströmungsregulierungselemente 7. Jeweils zwei davon bilden eine Teilgruppe. Die Luftströmungsregulierungselemente 7 sind mit ihren horizontal verlaufenden Längsachsen parallel zueinander angeordnet. Sie sind jeweils um die Achse entlang ihrer hinteren Längskante schwenkbar. Über seitlich angeordnete elektrisch betreibbare Stellmotoren 9 und Zahnräder 11 sind die beiden oberen rechten Luftströmungsregulierungselemente 7 als eine Teilgruppe, die beiden oberen linken Luftströmungsregulierungselemente 7 als die zweite Teilgruppe, die beiden unteren rechten Luftströmungsregulierungselemente 7 als die dritte Teilgruppe und die beiden unteren linken Luftströmungsregulierungselemente 7 als die vierte Teilgruppe in ihrer Schwenkstellung regelbar. Dabei sind die vier Teilgruppen jeweils eine in der rechten und linken Hälfte der jeweils oberen und unteren Hälfte der Luftströmungsregulierungseinheit 5 unabhängig voneinander in der Schwenkstellung ihrer jeweiligen beiden Luftströmungsregulierungselemente 7 einstellbar. Dadurch sind die auf vier Teilbereiche 13 oben rechts und links sowie unten rechts und links der Lufteintrittsseite 15 des Wärmetauschers 3 beaufschlagten Luftvolumenströme einzeln einstellbar. Je nach Schwenkstellung der Luftregulierungselemente 7 einer Teilgruppe ist der Luftvolumenstrom durch den Teilbereich 13 in Luftströmungsrichtung dahinter in der Größe variierbar. Die Regelung 19 ist dazu ausgebildet, die Messwerte der Sensoren 17 zu empfangen und aus diesen die gemessenen Größen der Luftvolumenströme durch die vier Teilbereiche 13 der Luftaustrittsseite 21 zu bestimmen. Aus den gemessenen Größen der Luftvolumenströme generiert die Regelung 19 die Steuersignale an die beispielsweise als Steppmotoren ausgebildeten Stellmotoren 9 zum automatischen Regeln der Schwenkstellung der Luftströmungsregulierungselemente 7 der Luftströmungsregulierungseinheit 5 um eine durch Sollwerte oder Sollwertbereiche vorgegebene Flächenverteilung der Luftbeaufschlagung des Wärmetauschers 3 zu erreichen oder beizubehalten.

Ist beispielsweise die Größe des Luftvolumenstroms durch den oberen rechten Teilbereich 13 der Luftaustrittseite 21 des Wärmetauschers 3 zu groß, wird die Schwenkstellung der beiden Luftströmungsregulierungselemente 7 der in der Luftströmungsregulierungseinheit 5 oberen rechten Teilgruppe so verändert, dass die Größe dieses Luftvolumenstroms verringert wird.

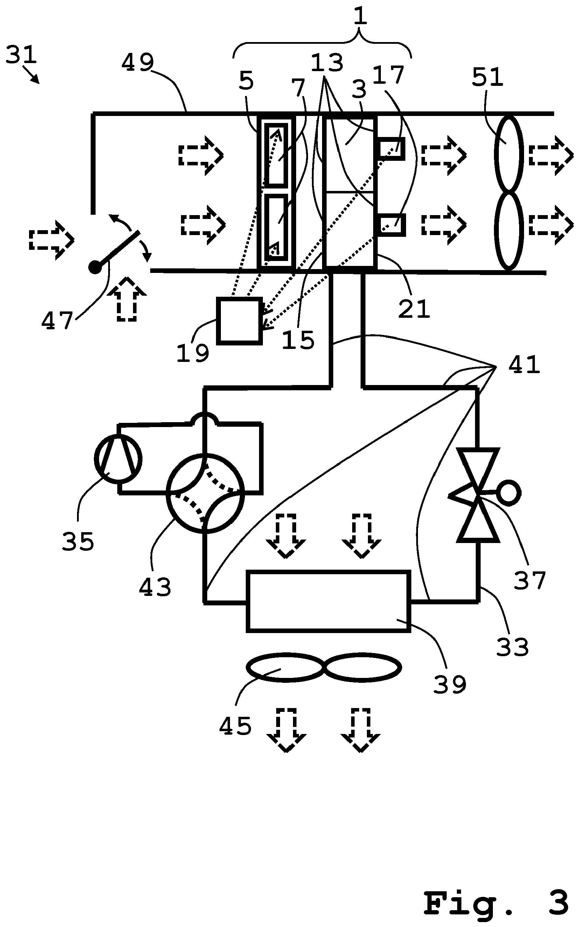

In Figur 3 ist in Blockdarstellung ein Ausführungsbeispiel einer Luftbehandlungsanlage 31 mit einem erfindungsgemäßen System 1 gezeigt. Das System 1 ist beispielsweise das in Figur 2 dargestellte. Die Luftbehandlungsanlage 31 ist als Heizungs- und Klimaanlage zur Luftbehandlung von Luft für einen Fahrzeuginnenraum ausgebildet. Sie umfasst einen Kältemittelkreislauf 33 mit im Wesentlichen einem Verdichter 35, einem inneren Wärmetauscher 3 für die Luftbehandlung, einem Expansionsorgan 37 und einem Außenwärmetauscher 39, die über Kältemittelleitungen 41 im Kreislauf verbunden sind. Der Kältemittelkreislauf 33 ist über ein Vierwegeventil 43 schaltbar entweder im Klimabetrieb zum Kühlen der zu behandelnden Luft oder im Wärmepumpenbetrieb zum Heizen der zu behandelnden Luft betreibbar. Im Klimabetrieb fungiert der innere Wärmetauscher 3 als Verdampfer und der Außenwärmetauscher 39 als Kondensator/Gaskühler. Im Wärmepumpenbetrieb arbeiten der innere Wärmetauscher 3 als Kondensator/Gaskühler und der Außenwärmetauscher 39 als Verdampfer. Das transkritisch zu betreibende Kältemittel ist CO2. Denkbar ist auch eine unterkritisch betreibbare Ausführung, bei der das Kältemittel beispielsweise R-1234yf ist. Sowohl der innere Wärmetauscher 3 als auch der Außenwärmetauscher 39 sind als Luft-Kältemittel-Wärmetauscher ausgebildet. Der Lüfter 45 dient zum Fördern von Luft durch den Außenwärmetauscher 39 nach außen in die Umgebung.

Über eine Luftklappe 47 gesteuert gelangt Umluft und/oder Frischluft in den Luftbehandlungsbereich 49. Die zu behandelnde Luft wird dabei vom Gebläse 51 im hinteren Bereich des Luftbehandlungsbereichs 49 angesaugt. Das Gebläse 51 ist dazu vorgesehen, die behandelte Luft in einen Fahrzeuginnenraum wie beispielsweise den Fahrgastraum einzublasen. In Luftströmungsrichtung vor dem Gebläse 51 ist das erfindungsgemäße System 1 mit Luftströmungsregulierungseinheit 5, Wärmetauscher 3 und Sensoren 17 zur Messung der Luftvolumenströme im Luftbehandlungsbereich 49 angeordnet. Die in Luftströmungsrichtung dem Wärmetauscher 3 vorgelagerte Luftströmungsregulierungseinheit 5 entspricht der in Figur 1 oder Figur 2 beschriebenen. Die Luftströmungsregulierungselemente 7 der Luftströmungsregulierungseinheit 5 werden von der Regelung 19 gesteuert. Damit ist der auf den jeweiligen der Teilbereiche 13 der Lufteintrittsseite 15 beaufschlagte Luftvolumenstrom des Wärmetauschers 3 einzeln einstellbar. Dafür empfängt die Regelung 19 die Messwerte zur gemessenen Größe des jeweiligen Luftvolumenstroms vom jeweiligen Sensor 17 und vergleicht diese mit vorgegebenen Sollwerten beziehungsweise Sollwertbereichen. Die Sensoren 17 sind an der Luftaustrittsseite 21 des Wärmetauschers 3 zur Messung des jeweiligen Luftvolumenstroms durch den jeweiligen der mindestens zwei Teilbereiche 13 der Luftaustrittsseite 21 angeordnet. Beispielsweise kann die Regulierung der Luftvolumenströme durch die Teilbereiche 13 derart eingestellt sein, dass die Flächenverteilung der Größe der Luftbeaufschlagung des Wärmetauschers 3 möglichst gleichmäßig auf die Lufteintrittsseite 15 verteilt ist.

Denkbar ist auch eine Ausführung der Luftbehandlungsanlage 31, bei der die Sensoren 17 zur Messung von Luftvolumenströmen wie in Figur 1 gezeigt an der Lufteintrittsseite 15 des Wärmetauschers 3 angeordnet sind.

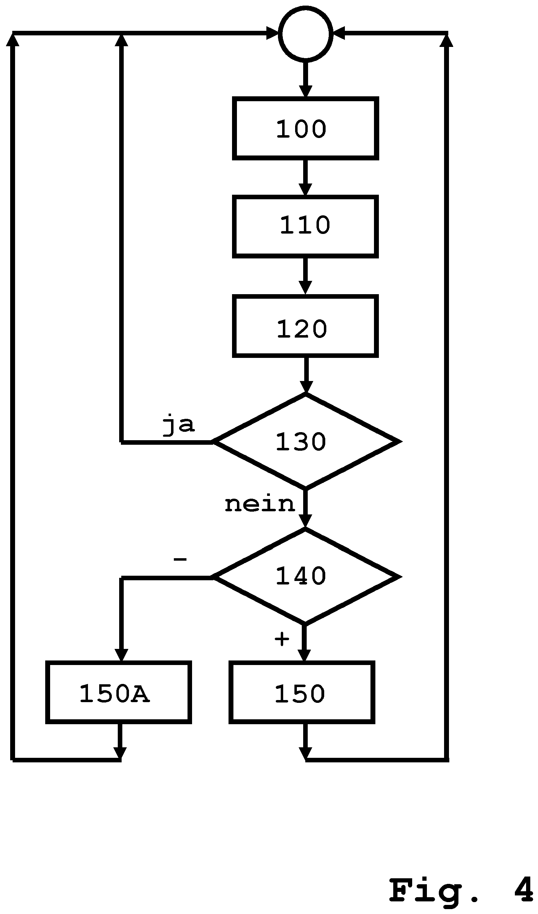

In Figur 4 ist als Flussdiagramm ein Ausführungsbeispiel eines Verfahrens zum Betreiben eines erfindungsgemäßen Systems in einer Luftbehandlungsanlage gezeigt. Das System ist beispielsweise eins wie in Figur 1 oder Figur 2 gezeigtes. Die Luftbehandlungsanlage ist zum Beispiel die in Figur 3 dargestellte.

Im ersten Schritt 100 werden die Größen der Luftvolumenströme durch mindestens zwei Teilbereiche der Lufteintrittsseite des Wärmetauschers oder durch mindestens zwei Teilbereiche der Luftaustrittsseite des Wärmetauschers mit den mindestens zwei Sensoren gemessen. Je nachdem ob die Sensoren auf Seiten der Lufteintrittsseite oder auf Seiten der Luftaustrittsseite des Wärmetauschers angeordnet sind, erfolgt die Messung der Größen der Luftvolumenströme durch die dortigen Teilbereiche. Der Wärmetauscher ist mit zu behandelnder Luft zum Wärmetausch mit einem Wärmemedium wie beispielsweise dem Kältemittel CO2 durchströmbar.

Im nächsten Schritt 110 werden die von den Sensoren gemessenen Werte an die Regelung übertragen. Dort erfolgt im folgenden Schritt 120 der Vergleich der gemessenen Größen der Luftvolumenströme mit vorgegebenen Sollwerten oder Sollwertbereichen. Die Sollwerte oder Sollwertbereiche sind beispielsweise gleiche vorgesehene Größen oder gleiche vorgesehene Größenbereiche für die Luftvolumenströme durch die obere und untere Hälfte der Lufteintrittsseite oder Luftaustrittsseite des Wärmetauschers.

Im nächsten Schritt 130 wird festgestellt, ob bei der jeweils gemessenen Größe des jeweiligen Luftvolumenstroms der dafür vorgesehene Sollwert oder Sollwertbereich eingehalten ist. Falls dieses für sämtliche der gemessenen Größen der Fall ist, also das Ergebnis "ja" ist, beginnt das Verfahren nach einer gewissen Dauer von beispielsweise 0,1 Sekunden erneut automatisch mit Schritt 100 durchzulaufen.

Wenn aber zumindest für eine gemessene Größe die Feststellung im Schritt 130 negativ ausgefalle ist, also das Ergebnis zumindest für eine gemessene Größe "nein" ist, erfolgt im Schritt 140 die weitere Feststellung jeweils für diese gemessene/n Größe/n, ob sie oberhalb des Sollwerts oder Sollwertbereichs liegt, also das Ergebnis "+" ist, oder unterhalb des Sollwerts oder Sollwertbereichs liegt, also das Ergebnis "-" ist. Dieser Schritt 140 wird für sämtliche gemessenen Größen durchgeführt, bei denen das Ergebnis im Schritt 130 negativ also "nein" war.

Für den Luftvolumenstrom oder die Luftvolumenströme, bei dem/denen die gemessene/n Größe/n zu groß ist/sind, werden dann im Schritt 150 die für diesen Luftvolumenstrom oder diese Luftvolumenströme vorgesehenen Luftströmungsregulierungselemente der Luftströmungsregulierungseinheit so geregelt, dass die Luftbeaufschlagung für diesen Teilbereich der Lufteintrittsseite oder Luftaustrittsseite des Wärmetauschers ein kleines Stück verringert wird.

Falls es sich bei diesen Luftregulierungselementen um schwenkbare Luftleitbleche handelt, wird/werden von der Regelung der/die elektrische/n Stellmotor/en dafür derart angesteuert, dass diese Luftleitbleche somit etwas mehr geschlossen werden.

Andererseits werden für den Luftvolumenstrom oder die Luftvolumenströme, bei dem/denen die gemessene/n Größe/n gemäß der Feststellung in Schritt 140 zu gering ist/sind, dann im Schritt 150A die für diesen Luftvolumenstrom oder diese Luftvolumenströme vorgesehenen Luftströmungsregulierungselemente der Luftströmungsregulierungseinheit so geregelt, dass die Luftbeaufschlagung für diesen Teilbereich der Lufteintrittsseite oder Luftaustrittsseite des Wärmetauschers ein kleines Stück vergrößert wird. Also, wenn es sich bei diesen Luftregulierungselementen um schwenkbare Luftleitbleche handelt, wird/werden von der Regelung der/die elektrische/n Stellmotor/en dafür derart angesteuert, dass diese Luftleitbleche somit etwas mehr auf Öffnen gestellt werden.

Nachdem Schritt/e 150 und/oder 150A durchgeführt ist/sind, beginnt mit Ablauf einer vorgegebenen Zeitspanne von beispielsweise 0,1 Sekunde das Verfahren automatisch mit Schritt 100 erneut durchzulaufen.

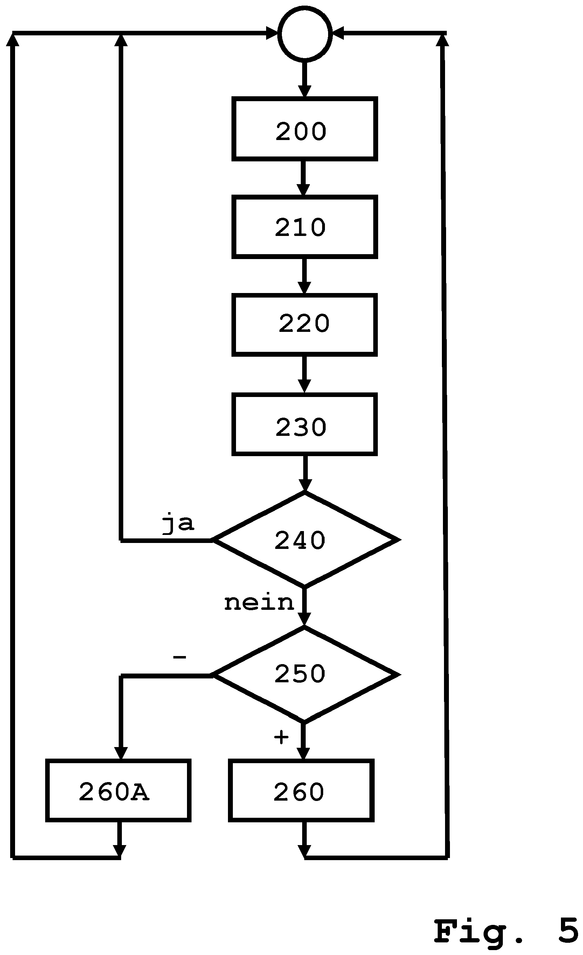

In Figur 5 ist als Flussdiagramm ein weiteres Ausführungsbeispiel eines Verfahrens zum Betreiben eines erfindungsgemäßen Systems in einer Luftbehandlungsanlage dargestellt. Das System ist beispielsweise eins wie in Figur 1 oder Figur 2 gezeigtes. Die Luftbehandlungsanlage ist zum Beispiel die in Figur 3 dargestellte.

Im ersten Schritt 200 werden Messwerte der Luftvolumenströme durch mindestens zwei Teilbereiche der Lufteintrittsseite des Wärmetauschers oder durch mindestens zwei Teilbereiche der Luftaustrittsseite des Wärmetauschers mit den mindestens zwei Sensoren pro Teilbereich gemessen. Je nachdem ob die Sensoren auf Seiten der Lufteintrittsseite oder auf Seiten der Luftaustrittsseite des Wärmetauschers angeordnet sind, erfolgt die Messung der Luftvolumenströme durch die dortigen Teilbereiche. Der Wärmetauscher ist mit zu behandelnder Luft zum Wärmetausch mit einem Wärmemedium wie beispielsweise dem Kühlmittel Wasser-Glykol-Gemisch durchströmbar.

Im nächsten Schritt 210 werden die von den Sensoren gemessenen Werte an die Regelung übertragen. Darauf werden im Schritt 220 die gemessenen Größen des jeweiligen Luftvolumenstroms durch das Bilden des Mittelwerts der für den jeweiligen Luftvolumenstrom durch den jeweiligen Teilbereich von den dem jeweiligen Luftvolumenstrom zugeordneten Sensoren gemessenen Werten ermittelt. Im folgenden Schritt 230 werden die gemessenen Größen der Luftvolumenströmen mit vorgegebenen Sollwertbereichen derart verglichen, dass die Differenzen der gemessenen Größen der Luftvolumenströme mit einem für die jeweilige Differenz vorgegebenen Sollwertbereich verglichen werden. Dabei kann zum Beispiel für sämtliche Differenzen der gemessenen Größen ein einheitlicher Sollwertbereich vorgegeben sein, wie beispielsweise ein Bereich um Null, so dass bei Einhaltung des Sollwertebereichs alle gemessenen Größen der Luftvolumenströme durch die Teilbereiche der Lufteintrittsseite und/oder Luftaustrittsseite des Wärmetauschers gleich oder nahezu gleich sind.

Im nächsten Schritt 240 wird festgestellt, ob bei der jeweils gemessenen Größe des jeweiligen Luftvolumenstroms die Differenzen zu den gemessenen Größen der jeweils anderen Luftvolumenströme den jeweiligen Sollwertbereich einhalten. Falls dieses für sämtliche der gemessenen Größen der Fall ist, also das Ergebnis "ja" ist, beginnt das Verfahren nach einer gewissen Dauer von beispielsweise 0,1 Sekunden erneut automatisch mit Schritt 200 durchzulaufen.

Wenn aber zumindest für ein Paar von gemessenen Größen die Feststellung im Schritt 240 negativ ausgefalle ist, also das Ergebnis zumindest für ein Paar gemessener Größen "nein" ist, erfolgt im Schritt 250 die weitere Feststellung jeweils für diese gemessene/n Größe/n, ob sie zum Erreichen der für sie vorgegebenen Sollwertbereiche für die Differenzen zu hoch liegt, also das Ergebnis "+" ist, oder zu niedrig liegt, also das Ergebnis "-" ist. Dieser Schritt 250 wird für sämtliche Paare von gemessenen Größen durchgeführt, bei denen das Ergebnis im Schritt 240 negativ also "nein" war.

Für den Luftvolumenstrom oder die Luftvolumenströme, bei dem/denen die gemessene/n Größe/n zu groß ist/sind, werden dann im Schritt 260 die für diesen Luftvolumenstrom oder diese Luftvolumenströme vorgesehenen Luftströmungsregulierungselemente der Luftströmungsregulierungseinheit so geregelt, dass die Luftbeaufschlagung für diesen Teilbereich der Lufteintrittsseite oder Luftaustrittsseite des Wärmetauschers ein kleines Stück verringert wird.

Falls es sich bei diesen Luftregulierungselementen um schwenkbare Luftleitbleche handelt, wird/werden von der Regelung der/die elektrische/n Stellmotor/en dafür derart angesteuert, dass diese Luftleitbleche somit etwas mehr geschlossen werden.

Andererseits werden für den Luftvolumenstrom oder die Luftvolumenströme, bei dem/denen die gemessene/n Größe/n gemäß der Feststellung in Schritt 250 zu gering ist/sind, dann im Schritt 260A die für diesen Luftvolumenstrom oder diese Luftvolumenströme vorgesehenen Luftströmungsregulierungselemente der Luftströmungsregulierungseinheit so geregelt, dass die Luftbeaufschlagung für diesen Teilbereich der Lufteintrittsseite oder Luftaustrittsseite des Wärmetauschers ein kleines Stück vergrößert wird. Also, wenn es sich bei diesen Luftregulierungselementen um schwenkbare Luftleitbleche handelt, wird/werden von der Regelung der/die elektrische/n Stellmotor/en dafür derart angesteuert, dass diese Luftleitbleche somit etwas mehr auf Öffnen gestellt werden.

Nachdem Schritt/e 260 und/oder 260A durchgeführt ist/sind, beginnt mit Ablauf einer vorgegebenen Zeitspanne von beispielsweise 0,1 Sekunde das Verfahren automatisch mit Schritt 200 erneut durchzulaufen.

## Patentansprüche

1. System (1) zur Luftbeaufschlagung eines Wärmetauschers (3) umfassend einen Wärmetauscher (3), der zum Wärmetausch mit Luft durchströmbar ist, mindestens zwei Sensoren (17) zur Messung von Luftvolumenströmen und eine Luftströmungsregulierungseinheit (5), die in vorgesehener Luftströmungsrichtung vor dem Wärmetauscher (3) angeordnet ist, **dadurch gekennzeichnet, dass**
- die Luftströmungsregulierungseinheit (5) mindestens zwei regelbare Luftströmungsregulierungselemente (7) umfasst,
- die Luftströmungsregulierungselemente (7) derart regelbar ausgebildet sind, dass für mindestens zwei Teilbereiche (13) der Lufteintrittsseite (15) des Wärmetauschers (3) der auf den jeweiligen dieser Teilbereiche (13) beaufschlagte Luftvolumenstrom einzeln einstellbar ist, und
- dass die Sensoren (17) derart angeordnet sind, dass damit die Größe eines jeweiligen Luftvolumenstroms durch den jeweiligen der mindestens zwei Teilbereiche (13) der Lufteintrittsseite (15) oder eines jeweiligen Luftvolumenstroms durch den jeweiligen von mindestens zwei Teilbereichen (13) der Luftaustrittsseite (21) des Wärmetauschers (3) messbar ist.

2. System (1) nach Anspruch 1 **dadurch gekennzeichnet, dass** es eine Regelung (19) umfasst, die derart ausgebildet ist, dass sie automatisch die Luftströmungsregulierungselemente (7) anhand der durch die Sensoren (17) gemessenen Größen der Luftvolumenströme so regelt, dass die jeweilige Größe des jeweiligen Luftvolumenstroms durch die mindestens zwei Teilbereiche (13) in einem jeweils vorgegebenen Sollwertbereich liegt.

3. System (1) nach Anspruch 1 oder 2 **dadurch gekennzeichnet, dass** die Regelung (19) derart ausgebildet ist, dass sie automatisch die Luftströmungsregulierungselemente (7) anhand der durch die Sensoren (17) gemessenen Größen der Luftvolumenströme so regelt, dass die Differenz/en der jeweiligen Größen der jeweiligen Luftvolumenströme durch die mindestens zwei Teilbereiche (13) in einem vorgegebenen Sollwertbereich lieg(t)/en.

4. System (1) nach einem der Ansprüche 1 bis 3 **dadurch gekennzeichnet, dass** die Sensoren (17) zur Messung der Luftvolumenströme durch die mindestens zwei Teilbereiche (13) auf Seiten der Luftaustrittsseite (21) des Wärmetauschers (3) oder zur Messung der Luftvolumenströme durch die mindestens zwei Teilbereiche (13) auf Seiten der Lufteintrittsseite (15) des Wärmetauschers (3) angeordnet sind.

5. System (1) nach einem der Ansprüche 1 bis 4 **dadurch gekennzeichnet, dass** es zur Messung des jeweiligen Luftvolumenstroms durch den jeweiligen Teilbereich (13) der Lufteintrittsseite (15) oder den jeweiligen Teilbereich (13) der Luftaustrittsseite (21) des Wärmetauschers (3) jeweils mindestens zwei der Sensoren (17) umfasst.

6. System (1) nach Anspruch 5 **dadurch gekennzeichnet, dass** die Regelung (19) derart ausgebildet ist, dass sie aus den für den jeweiligen Luftvolumenstrom durch den jeweiligen Teilbereich (13) von den dem jeweiligen Luftvolumenstrom zugeordneten Sensoren (17) gemessenen Werten den Mittelwert als gemessene Größe des jeweiligen Luftvolumenstroms bildet.

7. System (1) nach einem der Ansprüche 1 bis 6 **dadurch gekennzeichnet, dass** die regelbaren Luftströmungsregulierungselemente (7) der Luftströmungsregulierungseinheit (5) als schwenkbare Luftleitbleche ausgebildet sind.

8. System (1) nach Anspruch 7 **dadurch gekennzeichnet, dass** die als schwenkbare Luftleitbleche ausgebildeten regelbaren Luftströmungsregulierungselemente (7) über von der Regelung (19) ansteuerbare elektrische Stellmotoren (9) einzeln oder in Teilgruppen in ihrer Schwenkstellung individuell einstellbar sind.

9. System (1) nach einem der Ansprüche 1 bis 8 **dadurch gekennzeichnet, dass** die ein oder mehreren regelbaren Luftströmungsregulierungselemente (7) einer Hälfte der Luftströmungsregulierungseinheit (5) unabhängig von den ein oder mehreren regelbaren Luftströmungsregulierungselementen (7) der anderen Hälfte der Luftströmungsregulierungseinheit (5) regelbar ausgebildet sind.

10. System (1) nach Anspruch 9 **dadurch gekennzeichnet, dass** jeder der beiden Hälften der Luftströmungsregulierungseinheit (5) jeweils zwei Hälften mit jeweils einem oder mehreren regelbaren Luftströmungsregulierungselementen (7) aufweist, die unabhängig von denen der jeweils anderen Hälfte regelbar ausgebildet sind.

11. Luftbehandlungsanlage (31) umfassend ein System (1) nach einem der Ansprüche 1 bis 10.

12. Luftbehandlungsanlage (31) nach Anspruch 11, **dadurch gekennzeichnet, dass** sie zur Luftbehandlung von Luft für oder in einem Fahrzeuginnenraum vorgesehen ausgebildet ist.

13. Verfahren zum Betreiben eines Systems (1) nach einem der Ansprüche 1 bis 10 in einer Luftbehandlungsanlage (31) nach einem der Ansprüche 11 bis 12 **gekennzeichnet durch** die Schritte
a) des Messens (100, 200) der Größen der Luftvolumenströme durch mindestens zwei Teilbereiche (13) der Lufteintrittsseite (15) des Wärmetauschers (3) oder durch mindestens zwei Teilbereichen (13) der Luftaustrittsseite (21) des Wärmetauschers (3) mit den Sensoren (17);
b) des Vergleichens (120, 230) der gemessenen Größen der Luftvolumenströme mit vorgegebene(m)/n Sollwert/en oder Sollwertbereich/en;
c) des Feststellens (130, 240) bei der jeweils gemessenen Größe des jeweiligen Luftvolumenstroms, ob der dafür vorgegebenen Sollwert gegeben ist oder der dafür vorgegebene Sollwertbereich eingehalten ist; und
d) des Regelns (150, 150A, 260, 260A) des/der regelbaren Luftströmungsregulierungselement(s)/e (7) der Luftströmungsregulierungseinheit (5) hinsichtlich des/der Luftvolumenstroms/Luftvolumenströme, für den/die die Feststellung des Schritts c) negativ ausfiel, in der Weise, dass, wenn die gemessene Größe des Luftvolumenstroms zu gering ist, die Luftbeaufschlagung für diesen Teilbereich (13) erhöht wird oder, wenn die gemessene Größe des Luftvolumenstroms zu groß ist, die Luftbeaufschlagung für diesen Teilbereich (13) verringert wird.

14. Verfahren nach Anspruch 13 **dadurch gekennzeichnet, dass** die Luftströmungsregulierungselemente (7) anhand der durch die Sensoren (17) gemessenen Größen so geregelt werden, dass die Differenz/en der jeweiligen Größen der jeweiligen Luftvolumenströme durch die mindestens zwei Teilbereiche (13) der Lufteintrittsseite (15) oder der Luftaustrittsseite (21) des Wärmetauschers (3) in einem vorgegebenen Sollwertbereich lieg(t)/en oder diesen erreich(t)/en.

15. Verfahren nach Anspruch 13 oder 14 **dadurch gekennzeichnet, dass** die Luftströmungsregulierungselemente (7) anhand der durch die Sensoren (17) gemessenen Größen so geregelt werden, dass die Luftvolumenströme durch die Teilbereiche (13) der Lufteintrittsseite (15) und/oder Luftaustrittsseite (21) des Wärmetauschers (3) alle die gleiche Größe oder den gleichen Größenbereich erreichen oder nicht verlassen.

16. Verfahren nach einem der Ansprüche 13 bis 15, mit dem eine Luftbehandlungsanlage (31) mit einem System (1) nach Anspruch 6 betrieben wird, **gekennzeichnet durch** den Schritt,
des Ermittelns (220) der gemessenen Größe des jeweiligen Luftvolumenstroms durch das Bilden des Mittelwerts der für den jeweiligen Luftvolumenstrom durch den jeweiligen Teilbereich (13) von den dem jeweiligen Luftvolumenstrom zugeordneten Sensoren (17) gemessenen Werten.

17. Verfahren nach einem der Ansprüche 13 bis 16, mit dem eine Luftbehandlungsanlage (31) mit einem System (1) nach Anspruch 8 betrieben wird, gekennzeichnet im Schritt d) durch,
dass einzeln oder in Teilgruppen die als schwenkbare Luftleitbleche ausgebildeten regelbaren Luftströmungsregulierungselemente (7) in ihrer Schwenkstellung über von der Regelung (19) angesteuerte elektrische Stellmotoren (9) eingestellt werden.
